# EUROPEAN PATENT SPECIFICATION

(11) **EP 3 583 801 B1**
(45) Date of publication and mention of the grant of the patent: **10.03.2021**
(21) Application number: 17832817.5
(22) Date of filing: 28.12.2017
(51) Int. Cl.: H04W 36/00, H04W 24/08

(54) **METHOD AND NETWORK NODES TO MANAGE QOE MEASUREMENT COLLECTION DURING RELOCATION OR HANDOVER**
VERFAHREN UND NETWORKKNOTEN ZUR VERWALTUNG DER QOE-MESSUNGSERFASSUNG WÄHREND RELOCATION ODER HANDOVER
PROCÉDÉ ET NOEUDS DE RÉSEAU DESTINÉS À GÉRER LA COLLECTE DES MESURES DE QOE PENDANT LA RELOCALISATION OU LE TRANSFERT

(30) Priority: 16.02.2017 US 201762459883 P
(43) Date of publication of application: 25.12.2019
(73) Proprietor: Telefonaktiebolaget LM Ericsson (PUBL), 164 83 Stockholm (SE)
(72) Inventor: SHI, Nianshan, 176 74 Järfälla (SE); EKLÖF, Cecilia, 187 41 Täby (SE)
(74) Representative: Ericsson
(86) International application number: PCT/IB2017/058471
(87) International publication number: WO 2018/150248

(56) References cited:
- "3rd Generation Partnership Project; Technical Specification Group Services and System Aspects; Telecommunication management; Subscriber and equipment trace; Trace control and configuration management (Release 13)", 3GPP STANDARD; 3GPP TS 32.422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V13.0.0, 26 June 2015 (2015-06-26), pages 1-151, XP050965995, [retrieved on 2015-06-26]
- NOKIA ET AL: "Consideration on QMC for steaming in UTRAN", 3GPP DRAFT; R2-168138 CONSIDERATION TO UMTS QMC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 4 November 2016 (2016-11-04), XP051192396, Retrieved from the Internet: URL:http://www.3gpp.org/ftp/tsg_ran/WG2_RL 2/TSGR2_96/Docs/ [retrieved on 2016-11-04]
- ERICSSON: "Open issues for QoE measurement collection", 3GPP DRAFT; R2-1701604, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051212198, Retrieved from the Internet: URL:http://www.3gpp.org/ftp/Meetings_3GPP_ SYNC/RAN2/Docs/ [retrieved on 2017-02-12]

## Description

### RELATED APPLICATIONS

This application claims priority to U.S. Provisional Patent Application Serial No. 62/459,883, filed 16 February 2017.

### TECHNICAL FIELD

The present invention relates generally to wireless communication, and in particular to continuation of Quality of Experience Measurement Collection following relocation or handover of a terminal.

### BACKGROUND

Wireless communication networks are widely deployed, and are ubiquitous in many parts of the world. Wireless communication networks continue to evolve, expanding both the variety and complexity of services offered, and the number of subscribers. As these networks increase in area, scope, and complexity, effective management of the routine operation of the networks becomes increasingly difficult. In response, a number of partially- or fully-automated network diagnostic and analysis tools and procedures have been developed and standardized.

One tool useful for network analysis and diagnostics is a trace session. The Third Generation Partnership Project (3GPP), the international standard-setting body for modern wireless communication networks, has defined trace sessions and associated procedures and signaling in Technical Specifications (TS) 32.421, 32.422, and 32.423. During a trace session, extensive technical network data associated with a terminal is collected, recorded, and reported to a trace collection entity in the network. The trace data may then be analysed, such as for troubleshooting, optimization, and the like.

In 3GPP release 14 there is an ongoing work item for "Quality of Experience (QoE) Measurement Collection" for the Universal Mobile Telecommunications System (UMTS), the third-generation (3G), packet-based networking standard. A corresponding work item is planned for Long Term Evolution (LTE), the 4G standard, in release 15. Also, a later work item is planned for New Radio (NR), the 5G standard in development. The purpose of the work item(s) is to start measurements in a terminal, such as a User Equipment (UE), to collect information about the quality of streaming services used in the terminal. The streaming service is typically a third-party streaming application on top of packet-switched (PS) interactive Radio Access Bearers (RABs) defined in a radio access network (RAN). A purpose of the measurement collection is to be able to improve the RAN to get better quality of the streaming service. The current RAN-specific measurements are focused on radio related issues, and do not consider the end-user quality of the application being used.

Another purpose of the work item(s) is to use the Radio Resource Control (RRC) protocol to start the measurements and to transmit the result back from the terminal. The resulting file should be possible to extract in RAN, as the possible improvements will be done in RAN and there might be different operators for RAN and other parts of the network.

The measurements are initiated towards RAN by either a trace request from the core network (CN) or from the network subset responsible for operations, administration and management (OAM). The trace request contains an area where the terminal should perform the measurements, e.g., a list of cells, a routing area, or a public land mobile network (PLMN) area. A Radio Network Controller (RNC) then starts the measurements in the terminal by sending a so-called dash file to the terminal. The dash file contains configuration data for the terminal, e.g., duration of the measurements and what data that should be collected. The current approach assumes that the configuration file is included as a container in an RRC message. When the terminal has completed the measurement collection, it sends a result file back to the RNC in another RRC message containing a result container. When the RNC has received the result file, it forwards it to a trace collector entity (TCE) where the contents of the dash file can be retrieved. The trace session is managed and maintained by a Measurement Initiating node.

During relocation of servicing a terminal from a source network node to a target network node - e.g., UTRAN Serving Radio Network Subsystem (SRNS) Relocation, and in the future Inter-RAT Handover when UMTS, LTE and/or NR all support QoE - it is assumed that the QoE measurements should continue by the terminal.

The QoE configuration is sent either from OAM to RAN, or from CN to RAN. Besides the QoE dash configuration file, the IP address, and collecting area, there is also trace session control information sent to RAN - in particular, to the terminal's serving node, also referred to as a base station (eNB in LTE; gNB in NR). During relocation or handover, the trace session information is not known by the target serving node. Further there is a need to feedback to the OAM or the node that initiated the QoE measurement, e.g., Serving GRPS Support Node (SGSN), that the terminal with QoE measurement activated has been transferred to another serving node (e.g., new eNB or a serving node in a different RAN).

In order to allow the QoE measurement to continue, the trace session must be managed so it can be transferred smoothly from the source node to the target node, and so that the trace session can be managed in the new target node.

The Background section of this document is provided to place embodiments of the present invention in technological and operational context, to assist those of skill in the art in understanding their scope and utility. Approaches described in the Background section could be pursued, but are not necessarily approaches that have been previously conceived or pursued. Unless explicitly identified as such, no statement herein is admitted to be prior art merely by its inclusion in the Background section.

"3rd Generation Partnership Project; Technical Specification Group Services and System Aspects; Telecommunication management; Subscriber and equipment trace; Trace control and configuration management (Release 13)", 3GPP STANDARD; 3GPP TS 32.422, 3RD GENERATON PARTNERSHIP PROJECT (3GPP), MOBILE COMPETENCE CENTRE; 650, ROUTE DES LUCIOLES; F-06921 SOPHIA-ANTIPOLIS CEDEX; FRANCE, VOL SA WG5, NO. V13.0.0, 26 June 2015 (2015-06-26), pages 1-151.

"Consideration on QMC for streaming in UTRAN", Nokia, Alcatel-Lucent Shanghai Bell, R2-168138, 3GPP TSG-RAN WG2 Meeting #96, November 2016, describes the consideration on QoE Measurement Collection for streaming services in UTRAN.

### SUMMARY

The invention is defined in the appended claims. J In order to address one or more issues identified above, various solutions are proposed herein. The following presents a simplified summary of the disclosure in order to provide a basic understanding to those of skill in the art. This summary is not an extensive overview of the disclosure and is not intended to identify key/critical elements of embodiments of the invention or to delineate the scope of the invention. The sole purpose of this summary is to present some concepts disclosed herein in a simplified form as a prelude to the more detailed description that is presented later.

Throughout this document, the following terms will be used. However, these are used for illustrative purposes, and should necessarily be limiting to the scope of the disclosed embodiments.

TCE - Trace Collector Entity, the node where the measurement results are sent.

Measurement Initiating node - The node that initiated the measurements, *e.g*., SGSN, Mobility Management Entity (MME), Core in NR, or OAM. In some embodiments, the Measurement Initiating node additionally manages the trace session.

Source network node - The serving node where the measurement is initiated, *e.g*., RNC, eNB, gNB. It is the source serving RAN/node during relocation or handover - meaning it provides wireless service to the terminal prior to the relocation or handover to the target network node.

Target network node - The serving node where the terminal is moving to and the measurement continued, *e.g*., RNC, eNB, gNB. It is the target serving RAN/Node during relocation or handover - meaning it provides wireless service to the terminal after the relocation or handover from the source network node.

QoE Measurement - The measurements that are initiated by OAM, CN, or other nodes outside the RAN. The QoE Measurement is implemented as a trace session in the source network node. The measurement results are collected in an entity, *e.g*., TCE.

Trace session information - contains the information for managing the trace. Trace session information includes, *e.g*., trace session reference, trace configuration, an Internet Protocol (IP) address of the TCE, the terminal identity, etc.

According to one embodiment, the trace session information is transferred from the source network node to the target network node without modification.

When the source network node is preparing for the relocation, *e.g*., SRNS Relocation, Intra-RAT handover (*e.g*., X2 handover), or Inter-RAT handover, for a terminal for which QoE Measurement has been configured, the trace session information, which has been received by the source network node from the Measurement Initiating node, is sent from the source network node to the target network node.

The target network node provides information about the handling of the ongoing QoE measurement to the source network node, *e.g*., whether the QoE measurement is to be continued or terminated.

The source network node updates to the Measurement Initiating node that the trace session is transferred to the target network node.

The Measurement Initiating node may then continue the trace session management towards the target network node.

According to another embodiment, the trace session information may be modified.

In this embodiment, the source network node notifies the Measurement Initiating node that the terminal which is to be transferred to a target network node has QoE measurement configured/activated. The Measurement Initiating node can thus decide to provide the trace session information, either reusing the old sets of values sent to the source network node, or assign a set of new values to the target network node.

Although embodiments of the present invention are discussed herein primarily in terms of QoE measurement, this is only one example of the kinds of measurements encompassed herein. Other service-related measurements, which are similar to QoE Measurements, may advantageously employ the inventive solutions. Furthermore, although the embodiments are discussed primarily in terms of the UTRAN specification, this is only one example of the proposed solutions. The same or similar solutions may also apply to LTE, NR, or other network protocols. Additionally, the use of an SGSN is only an example. Other nodes or terminals may initiate the measurement and manage the trace session. Similarly, SRNS Relocation is only an example. Similar solutions may apply to other inter-RAT handover, X2 handover in LTE, Xn handover in NR, etc.

One embodiment relates to a method, performed by a source network node operative in a wireless communication network, of transferring service of a terminal to a target network node. The source network node has a Quality of Experience (QoE) Measurement configured for the terminal. The QoE Measurement is implemented as a trace session in the source network node by a Measurement Initiating node. In response to a pending transfer of service of the terminal from the source network node to a target network node, trace session information related to the QoE Measurement is sent to the target network node. Feedback indicating whether the QoE Measurement will be continued or terminated is received from the target network node. The Measurement Initiating node is notified whether the QoE Measurement will be continued by the terminal or terminated following the transfer of servicing the terminal from the source to the target network node.

Another embodiment relates to a method, performed by a target network node operative in a wireless communication network, of transferring service of a terminal from a source network node. The source network node has a Quality of Experience (QoE) Measurement configured for the terminal. The QoE Measurement is implemented as a trace session in the source network node by a Measurement Initiating node. Trace session information related to the QoE Measurement is received from the source network node. Whether or not to continue the QoE Measurement after the transfer is determined. Feedback indicating whether the QoE Measurement will be continued or terminated is sent to the source network node. If the QoE Measurement is to be continued, one or more messages managing the trace session are received from the Measurement Initiating node.

Yet another embodiment relates to a method, performed by Measurement Initiating node operative in a wireless communication network, of transferring service of a terminal from a source network node to a target network node, wherein the source network node has a Quality of Experience (QoE) Measurement configured for the terminal, the QoE Measurement implemented as a trace session in the source network node by the Measurement Initiating node. An indication of a pending transfer of service to the target network node, and an indication of whether the target network node can continue the QoE Measurement, are received from the source network node. If the target network node can continue the QoE Measurement, one or more messages managing the trace session are sent to the target network node.

Still another embodiment relates to a source network node operative in a wireless communication network and operative to provide wireless communication service to a terminal prior to a transfer of service of the terminal to a target network node. The source network node has a Quality of Experience (QoE) Measurement configured for the terminal. The QoE Measurement is implemented as a trace session in the source network node by a Measurement Initiating node. The source network node includes a transceiver operative to exchange wireless messages with the terminal and other network nodes, and processing circuitry operatively connected to the transceiver. The processing circuitry is operative to: in response to a pending transfer of service of the terminal from the source network node to a target network node, send trace session information related to the QoE Measurement to the target network node; receive from the target network node, feedback indicating whether the QoE Measurement will be continued or terminated; and notify the Measurement Initiating node whether the QoE Measurement will be continued by the terminal or terminated following the transfer of service of the terminal from the source to the target network node.

Still another embodiment relates to a target network node operative in a wireless communication network and operative to provide wireless communication service to a terminal following a transfer of service of the terminal from a source network node. The source network node has a Quality of Experience (QoE) Measurement configured for the terminal. The QoE Measurement is implemented as a trace session in the source network node by a Measurement Initiating node. The target network node includes a transceiver operative to exchange wireless messages with the terminal and other network nodes, and processing circuitry operatively connected to the transceiver. The processing circuitry operative to: receive trace session information related to the QoE Measurement from the source network node; determine whether to continue the QoE Measurement after the transfer; send to the source network node, feedback indicating whether the QoE Measurement will be continued or terminated; and if the QoE Measurement is to be continued, receive from the Measurement Initiating node one or more messages managing the trace session.

Still another embodiment relates to a Measurement Initiating node operative in a wireless communication network comprising at least a source network node operative to provide wireless communication service to a terminal prior to a transfer of service of the terminal, and a target network node operative to provide wireless communication service to the terminal following the transfer of service of the terminal. The source network node has a Quality of Experience (QoE) Measurement configured for the terminal. The QoE Measurement is implemented as a trace session in the source network node. The Measurement Initiating node includes communication circuitry operative to exchange messages with other network nodes, and processing circuitry operatively connected to the communication circuitry. The processing circuitry operative to: receive, from the source network node, an indication of a pending transfer of service of the terminal to the target network node, and an indication of whether the target network node can continue the QoE Measurement; and if the target network node can continue the QoE Measurement, send to the target network node one or more messages managing the trace session.

The proposed solutions of the present disclosure may provide one or more technical advantages. For instance, the QoE measurement is continued after relocation or handover, and the trace session is managed correctly after the relocation or handover. In the future some other service measurement maybe be introduced. In the similar way as what we propose for QoE measurement, those future measurements can also be continued after relocation or handover, by applying the teachings of the present disclosure. Other advantages may be readily available to one having skill in the art. Certain embodiments may have none, some, or all of the recited advantages.

### BRIEF DESCRIPTION OF THE DRAWINGS

The present invention will now be described more fully hereinafter with reference to the accompanying drawings, in which embodiments of the invention are shown. However, this invention should not be construed as limited to the embodiments set forth herein. Rather, these embodiments are provided so that this disclosure will be thorough and complete, and will fully convey the scope of the invention to those skilled in the art. Like numbers refer to like elements throughout.
Figure 1 is a flow diagram of a method, by a source network node, of transferring service of a terminal for which a QoE Measurement is configured/active to a target network node.
Figure 2 is a flow diagram of a method, by a target network node, of transferring service of a terminal for which a QoE Measurement is configured/active from a source network node.
Figure 3 is a flow diagram of a method, by a Measurement Initiating node, of transferring service of a terminal for which a QoE Measurement is configured/active from a source network node to a target network node.
Figure 4 is a functional block diagram of a representative wireless communication network.
Figure 5 is a block diagram of functional means, units, or modules in a source network node.
Figure 6 is a block diagram of functional means, units, or modules in a target network node.
Figure 7 is a block diagram of functional means, units, or modules in a Measurement Initiating node.

### DETAILED DESCRIPTION

The description below describes how the QoE (or similar) measurement trace session management are continued after relocation or handover. According to certain embodiments, all of these steps may be performed. According to alternative embodiments, fewer steps may be performed, certain steps may be combined, and/or the order of the steps may be modified, as appropriate and as readily determined by one of skill in the art.

In one embodiment, the trace session information is transferred from the source network node to the source network node without modification.

Step 1: During relocation or handover (*e.g*., SRNS Relocation, intra-RAT handover, or inter-RAT handover), when the source network node prepares the relocation, if it has QoE Measurement configured for the UE, it will send the trace session information to the target network node. In one embodiment, this may comprise using defined RRC messages. In one embodiment, the trace session information is relayed to the target network node through the CN. For example, new information is added to a RELOCATION REQUIRED message, which is sent from the source network node to CN, and in a RELOCATION REQUEST message, which is sent from CN to the target network node. The trace session information can be used to tag the trace record to allow simpler construction of the total record by the entity which combines trace records. The parameters may include all or some of the following, as well as other information:
- The Trace Reference: Identifies a trace session;
- Terminal identity: Identifies the terminal, could be e.g. International Mobile Subscriber Identity (IMSI), Temporary Mobile Subscriber Identity (TMSI), or the like;
- Trace Propagation Parameters: indicates the trace parameters to activate a trace session by a trace parameter propagation;
- Trace Recording Session Reference; and/or
- IP address for trace collection or related table.

The relevant trace session information sent from the Measurement Initiating node to the source network node is forwarded from the source network node to the target network node. If the target network node can proceed to send the QoE measurement result to TCE, the QoE measurement is continued smoothly. If the target network node cannot proceed, however, it may decide to terminate the QoE measurement.

As one example: new Information Elements (lEs) containing the trace session information are added to a RELOCATION REQUIRED message (source network node -> CN). Tables 1-3 below provide examples of such additional lEs. The trace session information is then sent in a RELOCATION REQUEST message (CN -> target network node).

Step 2: The target network node sends feedback to the source network node about whether the QoE measurement will be continued or terminated. For example, the feedback is added as new IE in a RELOCATION REQUEST ACKNOWLEDGE message (target network node -> CN), and in a RELOCATION COMMAND message (CN -> source network node).

Step 3: The source network node notifies the Measurement Initiating node that the QoE Measurement for the terminal is either terminated or continued in the target network node. The source network node notifies also the CN that the trace session has been transferred to the target network node. For example, the notification is sent by adding a new IE in an UPLINK INFORMATION EXCHANGE REQUEST message (source network node -> CN). The source network node may also need to provide information on the target network node.

Step 4: The Measurement Initiating node receives the information provided by the source network node. If the trace session is not terminated, the Measurement Initiating node understands that the trace session is transferred to the target network node. The Measurement Initiating node then continues the management of the trace session with the target network node.

In another embodiment, in the case that the Measurement Initiating node participates in the relocation or handover (e.g., in an SRNS relocation, the Measurement Initiating node may be a SGSN node involved in the relocation), it reads the trace session information from the message prepared by the source network node in Step 1. It may also read the feedback from the target network node in Step 2. The SGSN could notify the source network node that it has transferred the trace session to the target network node, for example in a RELOCATION COMMAND message (SGSN -> source network node). In this case, Step 3 may be omitted.

In another embodiment, the trace session information may be modified.

In this embodiment, the source network node notifies the Measurement Initiating node that the terminal, for which servicing is transferred to the target network node, has currently QoE measurement configured/activated. The source network node may send the entire set of the trace session information it earlier received from the Measurement Initiating node, as in Step 1 in the previous embodiment, or only part of the trace session information, e.g., trace session reference, or even only a notification, relying on the Measurement Initiating node retaining all the related trace session information for the terminal.

The Measurement Initiating node can thus decide to provide the trace session information, either reusing the old sets of value sent to the source network node, or assigning a set of new values to the target network node.

The Measurement Initiating node is aware that the terminal has a QoE measurement activated and is transferring to the target network node. The Measurement Initiating node may or may not participate in the transfer.

If the Measurement Initiating node (*e.g*., SGSN) participates in the relocation or handover, the source network node notifies the Measurement Initiating node (*e.g*., SGSN) that the terminal is currently configured with the QoE measurement during relocation preparation, *e.g.,* in a RELOCATION REQUIRED message. The Measurement Initiating node (*e.g*., SGSN) may decide to retain the old set of trace session information (trace session reference, IP address for the measurement trace collection) or assign a new set of the values and send them over to the target network node, e.g., in a RELOCATION REQUEST message.

If the Measurement Initiating node does not participate in the handover (*e.g*., during X2 handover in LTE, or Xn handover in NR), the source network node may need to perform a handshake procedure with the Measurement Initiating node in advance. The source network node then passes the trace session information - possibly modified by the Measurement Initiating node during the handshake - to the target network node, *e.g*., via X2 interface.

This could occur as a part of the relocation or handover procedure, either before it or after. A new procedure may be defined for the trace session management, for example for trace session handshake, or more generally trace session modification.

In the current specification, the Measurement Initiating node (*e.g*., SGSN) could deactivate the trace, *e.g*., in a CN DEACTIVE TRACE message. In this case, the Measurement Initiating node assumes that the RAN node that receives the deactivation message already has the trace session reference. However, if the SGSN wishes to stop any ongoing QoE measurement after the terminal relocation, there is a need to modify the procedure, so that the SGSN may use the terminal identity, or other means, to deactivate the trace. This is because the target network node may not have the trace session reference. According to embodiments of the present invention, both the target network node and the Measurement Initiating node are aware that the terminal is undergoing relocation or handover, and that it currently has the QoE measurement configured/activated. The trace session for the QoE measurement can be managed after the relocation or handover.

Although embodiments of the present invention have been explained using the examples of adding new IEs to the existing RRC messages, this is not a limitation. Alternatively, new IEs may added to other messages, and/or new RRC messages may be introduced for this signaling.

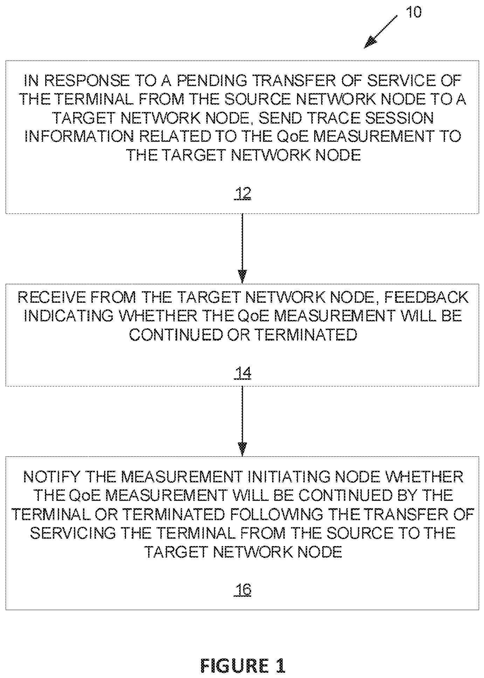

The above embodiments describe a series of actions and communication of messages between and among a source network node and target network node in a terminal relocation or handover, and a Measurement Initiating node (and/or other CN nodes). At each of these network nodes, specific steps are taken to implement this overall functionality. Figures 1-3 describe the steps of methods performed at each such node.

Figure 1 depicts a method 10, performed by a source network node operative in a wireless communication network, of transferring service of a terminal to a target network node. The source network node has a Quality of Experience (QoE) Measurement configured for the terminal. The QoE Measurement is implemented as a trace session in the source network node by a Measurement Initiating node. In response to a pending transfer of service of the terminal from the source network node to a target network node, the source network node sends trace session information related to the QoE Measurement to the target network node (block 12). The source network node receives from the target network node, feedback indicating whether the QoE Measurement will be continued or terminated (block 14). The source network node notifies the Measurement Initiating node whether the QoE Measurement will be continued by the terminal or terminated following the transfer of servicing the terminal from the source to the target network node (block 16).

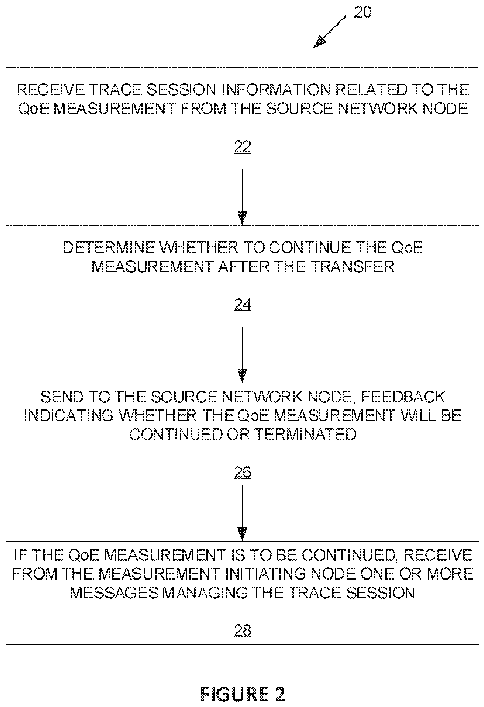

Figure 2 depicts a method 20, performed by a target network node operative in a wireless communication network, of transferring service of a terminal from a source network node. The source network node has a Quality of Experience (QoE) Measurement configured for the terminal. The QoE Measurement is implemented as a trace session in the source network node by a Measurement Initiating node. The target network node receives trace session information related to the QoE Measurement from the source network node (block 22). The target network node determines whether to continue the QoE Measurement after the transfer (block 24). The target network node sends to the source network node, feedback indicating whether the QoE Measurement will be continued or terminated (block 26). If the QoE Measurement is to be continued, the target network node receives from the Measurement Initiating node one or more messages managing the trace session (block 28).

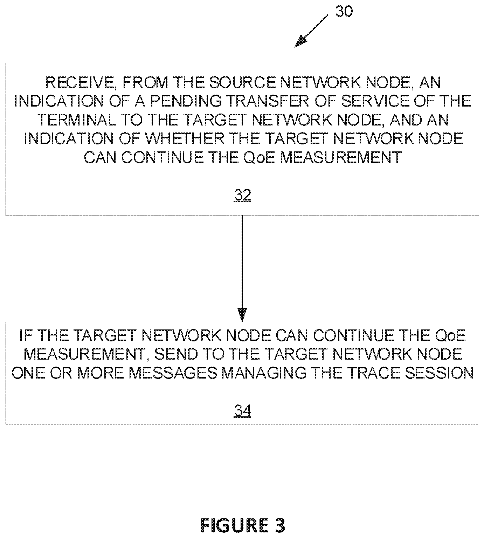

Figure 3 depicts a method 30, performed by Measurement Initiating node operative in a wireless communication network, of transferring service of a terminal from a source network node to a target network node. The source network node has a Quality of Experience (QoE) Measurement configured for the terminal. The QoE Measurement is implemented as a trace session in the source network node by the Measurement Initiating node. The Measurement Initiating node receives, from the source network node, an indication of a pending transfer of service of the terminal to the target network node, and an indication of whether the target network node can continue the QoE Measurement (block 32). If the target network node can continue the QoE Measurement, the Measurement Initiating node sends to the target network node one or more messages managing the trace session (block 34).

The embodiments contemplated herein have been described in terms of various network nodes and elements, which will now be described in more detail with reference to the accompanying Figures.

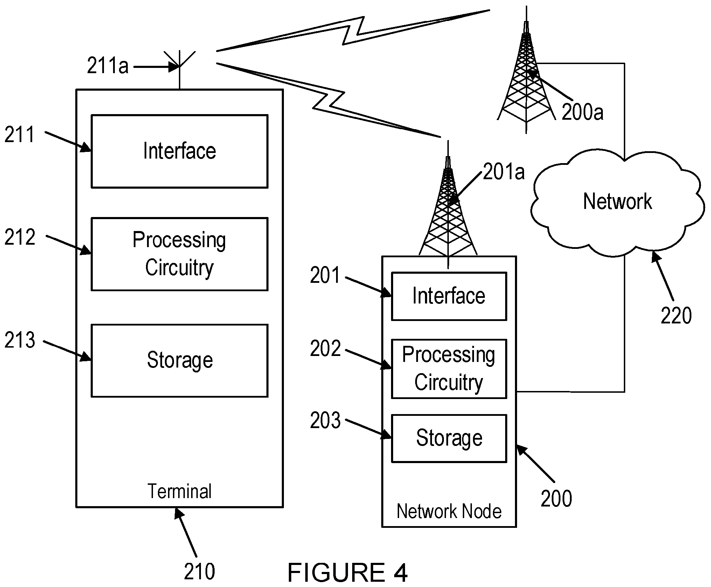

As discussed above, the solutions described herein may be implemented in any appropriate type of system using any suitable components. Particular embodiments of the described solutions may be implemented in a wireless network such as the example wireless communication network illustrated in Figure 4. In the example embodiment of Figure 4, the wireless communication network provides communication and other types of services to one or more terminals, referred to generally herein as terminals. In the illustrated embodiment, the wireless communication network includes one or more instances of network nodes that facilitate the terminals' access to and/or use of the services provided by the wireless communication network. The wireless communication network may further include any additional elements suitable to support communication between terminals or between a terminal and another communication device, such as a landline telephone.

Network 220 may comprise one or more IP networks, public switched telephone networks (PSTNs), packet data networks, optical networks, wide area networks (WANs), local area networks (LANs), wireless local area networks (WLANs), wired networks, wireless networks, metropolitan area networks, and other networks to enable communication between devices.

The wireless communication network may represent any type of communication, telecommunication, data, cellular, and/or radio network or other type of system. In particular embodiments, the wireless communication network may be configured to operate according to specific standards or other types of predefined rules or procedures. Thus, particular embodiments of the wireless communication network may implement communication standards, such as Global System for Mobile Communications (GSM), Universal Mobile Telecommunications System (UMTS), Long Term Evolution (LTE), New Radio (NR), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, and/or ZigBee standards.

Figure 4 illustrates a wireless network comprising a more detailed view of network node 200 and terminal 210, in accordance with a particular embodiment. For simplicity, Figure 4 only depicts network 220, network nodes 200 and 200a, and terminal 210. Network node 200 comprises processing circuitry 202, storage 203, interface 201, and antenna 201a. Similarly, terminal 210 comprises processing circuitry 212, storage 213, interface 211 and antenna 211a. These components may work together in order to provide network node and/or terminal functionality, such as providing wireless connections in a wireless network. In different embodiments, the wireless network may comprise any number of wired or wireless networks, network nodes, base stations, controllers, terminals, relay stations, and/or any other components that may facilitate or participate in the communication of data and/or signals whether via wired or wireless connections.

As used herein, "network node" refers to equipment capable, configured, arranged and/or operable to communicate directly or indirectly with a terminal and/or with other equipment in the wireless communication network that enable and/or provide wireless access to the terminal. Examples of network nodes include, but are not limited to, access points (APs), in particular radio access points. A network node may represent base stations (BSs), such as radio base stations. Particular examples of radio base stations include Node Bs, and evolved Node Bs (eNBs). Base stations may be categorized based on the amount of coverage they provide (or, stated differently, their transmit power level) and may then also be referred to as femto base stations, pico base stations, micro base stations, or macro base stations. "Network node" also includes one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base stations may also be referred to as nodes in a distributed antenna system (DAS).

As a particular non-limiting example, a base station may be a relay node or a relay donor node controlling a relay.

Yet further examples of network nodes include multi-standard radio (MSR) radio equipment such as MSR BSs, network controllers such as radio network controllers (RNCs) or base station controllers (BSCs), base transceiver stations (BTSs), transmission points, transmission nodes, Multi-cell/multicast Coordination Entities (MCEs), core network nodes (*e.g*., MSCs, MMEs), O&M nodes, OSS nodes, SON nodes, positioning nodes (*e.g*., E-SMLCs), and/or MDTs. More generally, however, network nodes may represent any suitable device (or group of devices) capable, configured, arranged, and/or operable to enable and/or provide a terminal access to the wireless communication network or to provide some service to a terminal that has accessed the wireless communication network.

In Figure 4, Network node 200 comprises processing circuitry 202, storage 203, interface 201, and antenna 201a. These components are depicted as individual units located within a single larger unit. In practice however, a network node may comprises multiple different physical components that make up a single illustrated component (*e.g*., interface 201 may comprise terminals for coupling wires for a wired connection and a radio transceiver for a wireless connection). As another example, network node 200 may be a virtual network node in which multiple different physically separate components interact to provide the functionality of network node 200 (*e.g*., processing circuitry 202 may comprise three separate processors located in three separate enclosures, where each processor is responsible for a different function for a particular instance of network node 200). Similarly, network node 200 may be composed of multiple physically separate components (*e.g*., a NodeB component and a RNC component, a BTS component and a BSC component, etc.), which may each have their own respective processor, storage, and interface components. In certain scenarios in which network node 200 comprises multiple separate components (*e.g*., BTS and BSC components), one or more of the separate components may be shared among several network nodes. For example, a single RNC may control multiple NodeB's. In such a scenario, each unique NodeB and BSC pair, may be a separate network node. In some embodiments, network node 200 may be configured to support multiple radio access technologies (RATs). In such embodiments, some components may be duplicated (*e.g*., separate storage 203 for the different RATs) and some components may be reused (*e.g*., the same antenna 201 amay be shared by the RATs).

Processing circuitry 202 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in conjunction with other network node 200 components, such as storage 203, network node 200 functionality. For example, processing circuitry 202 may execute instructions stored in storage 203. Such functionality may include providing various wireless features discussed herein to a terminal, such as terminal 210, including any of the features or benefits disclosed herein.

Storage 203 may comprise any form of volatile or non-volatile computer readable memory including, without limitation, persistent storage, solid state memory, remotely mounted memory, magnetic media, optical media, random access memory (RAM), read-only memory (ROM), Flash memory, removable media, or any other suitable local or remote memory component. Storage 203 may store any suitable instructions, data or information, including software and encoded logic, utilized by network node 200. Storage 203 may be used to store any calculations made by processing circuitry 202 and/or any data received via interface 201.

Network node 200 also comprises interface 201 which may be used in the wired or wireless communication of signaling and/or data between network node 200, network 220, and/or terminal 210. For example, interface 201 may perform any formatting, coding, or translating that may be needed to allow network node 200 to send and receive data from network 220 over a wired connection. Interface 201 may also include a radio transmitter and/or receiver that may be coupled to or a part of antenna 201a. The radio may receive digital data that is to be sent out to other network nodes or terminals via a wireless connection. The radio may convert the digital data into a radio signal having the appropriate channel and bandwidth parameters. The radio signal may then be transmitted via antenna 201a to the appropriate recipient (*e.g*., terminal 210). The interface 201 may include either or both of communication circuitry operative to exchange messages with other network nodes 200a, and a transceiver operative to wirelessly exchange messages with a terminal 201.

Antenna 201a may be any type of antenna capable of transmitting and receiving data and/or signals wirelessly. In some embodiments, antenna 201a may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line.

As used herein, "terminal" refers to a device capable, configured, arranged and/or operable to communicate wirelessly with network nodes and/or another terminal. Communicating wirelessly may involve transmitting and/or receiving wireless signals using electromagnetic signals, radio waves, infrared signals, and/or other types of signals suitable for conveying information through air. In particular embodiments, terminals may be configured to transmit and/or receive information without direct human interaction, also known as Machine-to-Machine (M2M) or Internet of Things (loT) terminals. For instance, a terminal may be designed to transmit information to a network on a predetermined schedule, when triggered by an internal or external event, or in response to requests from the network. Generally, a terminal may represent any device capable of, configured for, arranged for, and/or operable for wireless communication, for example radio communication devices. Examples of terminals include, but are not limited to, user equipment (UE) such as smart phones. Further examples include wireless cameras, wireless-enabled tablet computers, laptop-embedded equipment (LEE), laptop-mounted equipment (LME), USB dongles, and/or wireless customer-premises equipment (CPE).

As one specific example, a terminal may represent a UE configured for communication in accordance with one or more communication standards promulgated by the 3^{rd} Generation Partnership Project (3GPP), such as 3GPP's GSM, UMTS, LTE, NR, NB-IoT, and/or other 5G standards. As used herein, a "user equipment" or "UE" may not necessarily have a "user" in the sense of a human user who owns and/or operates the relevant device. Instead, a UE may represent a device that is intended for sale to, or operation by, a human user but that may not initially be associated with a specific human user.

The terminal may support device-to-device (D2D) communication, for example by implementing a 3GPP standard for sidelink communication, and may in this case be referred to as a D2D communication device.

As yet another specific example, in an Internet of Things (loT) scenario, a terminal may represent a machine or other device that performs monitoring and/or measurements, and transmits the results of such monitoring and/or measurements to another terminal and/or a network node. The terminal may in this case be a machine-to-machine (M2M) device, which may in a 3GPP context be referred to as a machine-type communication (MTC) device. As one particular example, the terminal may be a UE implementing the 3GPP narrow band internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal may represent a vehicle or other equipment that is capable of monitoring and/or reporting on its operational status or other functions associated with its operation.

A terminal as described above may represent the endpoint of a wireless connection, in which case the device may be referred to as a wireless terminal. Furthermore, a terminal as described above may be mobile, in which case it may also be referred to as a mobile terminal.

As depicted in Figure 4, terminal 210 may be any type of wireless endpoint, mobile station, mobile phone, wireless local loop phone, smartphone, user equipment, desktop computer, PDA, cell phone, tablet, laptop, VoIP phone or handset, which is able to wirelessly send and receive data and/or signals to and from a network node, such as network node 200 and/or other terminals. Terminal 210 comprises processing circuitry 212, storage 213, interface 211, and antenna 211a. Like network node 200, the components of terminal 210 are depicted as independent units located within a single larger unit, however in practice a terminal may comprises multiple different physical components that make up a single illustrated component (e.g., storage 213 may comprise multiple discrete microchips, each microchip representing a portion of the total storage capacity).

Processing circuitry 212 may be a combination of one or more of a microprocessor, controller, microcontroller, central processing unit, digital signal processor, application specific integrated circuit, field programmable gate array, or any other suitable computing device, resource, or combination of hardware, software and/or encoded logic operable to provide, either alone or in combination with other terminal 210 components, such as storage 213, terminal 210 functionality. Such functionality may include providing various wireless features discussed herein, including any of the features or benefits disclosed herein.

Storage 213 may be any form of volatile or non-volatile memory including, without limitation, persistent storage, solid state memory, remotely mounted memory, magnetic media, optical media, random access memory (RAM), read-only memory (ROM), Flash memory, removable media, or any other suitable local or remote memory component. Storage 213 may store any suitable data, instructions, or information, including software and encoded logic, utilized by terminal 210. Storage 213 may be used to store any calculations made by processor 212 and/or any data received via interface 211.

Interface 211 may be used in the wireless communication of signaling and/or data between terminal 210 and network node 200. For example, interface 211 may perform any formatting, coding, or translating that may be needed to allow terminal 210 to send and receive data from network node 200 over a wireless connection. Interface 211 may also include a radio transmitter and/or receiver that may be coupled to or a part of antenna 211a. The radio may receive digital data that is to be sent out to network node 201 via a wireless connection. The radio may convert the digital data into a radio signal having the appropriate channel and bandwidth parameters. The radio signal may then be transmitted via antenna 211a to network node 200.

Antenna 211a may be any type of antenna capable of transmitting and receiving data and/or signals wirelessly. In some embodiments, antenna 211a may comprise one or more omni-directional, sector or panel antennas operable to transmit/receive radio signals between 2 GHz and 66 GHz. For simplicity, antenna 211a may be considered a part of interface 211 to the extent that a wireless signal is being used.

Any steps or features described herein are merely illustrative of certain embodiments. It is not required that all embodiments incorporate all the steps or features disclosed nor that the steps be performed in the exact order depicted or described herein. Furthermore, some embodiments may include steps or features not illustrated or described herein, including steps inherent to one or more of the steps disclosed herein.

Any appropriate steps, methods, or functions may be performed through a computer program product that may, for example, be executed by the components and equipment illustrated in one or more of the figures above. For example, storage 203 may comprise computer readable means on which a computer program can be stored. The computer program may include instructions which cause processing circuitry 202 (and any operatively coupled entities and devices, such as interface 201 and storage 203) to execute methods according to embodiments described herein. The computer program and/or computer program product may thus provide means for performing any steps herein disclosed.

Any appropriate steps, methods, or functions may be performed through one or more functional modules. Each functional module may comprise software, computer programs, subroutines, libraries, source code, or any other form of executable instructions that are executed by, for example, a processor. In some embodiments, each functional module may be implemented in hardware and/or in software. For example, one or more or all functional modules may be implemented by processing circuitry 212 and/or 202, possibly in cooperation with storage 213 and/or 203. Processing circuitry 212 and/or 202 and storage 213 and/or 203 may thus be arranged to allow processing circuitry 212 and/or 202 to fetch instructions from storage 213 and/or 203 and execute the fetched instructions to allow the respective functional module to perform any steps or functions disclosed herein.

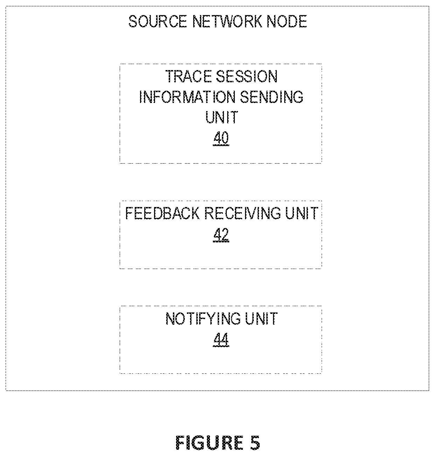

Figure 5 illustrates a schematic block diagram of a source network node in a wireless network according to some embodiments (for example, the wireless network shown in Figure 4). As shown, the source network node implements various functional means, units, or modules, *e.g*., via the processing circuitry 202 in Figure 4 and/or via software code. These functional means, units, or modules, *e.g*., for implementing the method 10 described herein, include for instance: trace session information sending unit 40, feedback receiving unit 42, and notifying unit 44. Trace session information sending unit 40 is configured to, in response to a pending transfer of service of the terminal from the source network node to a target network node, send trace session information related to the QoE Measurement to the target network node. The feedback receiving unit 42 is configured to receive from the target network node, feedback indicating whether the QoE Measurement will be continued or terminated. Notifying unit 44 is configured to notify the Measurement Initiating node whether the QoE Measurement will be continued by the terminal or terminated following the transfer of servicing the terminal from the source to the target network node.

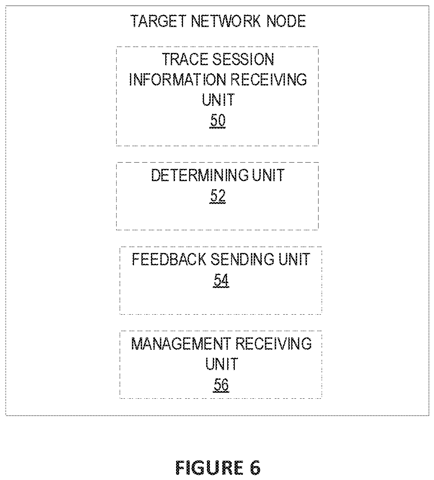

Figure 6 illustrates a schematic block diagram of a target network node in a wireless network according to some embodiments (for example, the wireless network shown in Figure 4). As shown, the target network node implements various functional means, units, or modules, *e.g*., via the processing circuitry 202 in Figure 4 and/or via software code. These functional means, units, or modules, *e.g*., for implementing the method 20 described herein, include for instance: trace session information receiving unit 50, determining unit 52, feedback sending unit 52, and management receiving unit 54. Trace session information receiving unit 40 is configured to receive trace session information related to the QoE Measurement from the source network node. Determining unit 52 is configured to determine whether to continue the QoE Measurement after the transfer. Feedback sending unit 54 is configured to send to the source network node, feedback indicating whether the QoE Measurement will be continued or terminated. Management receiving unit 56 is configured to, if the QoE Measurement is to be continued, receive from the Measurement Initiating node one or more messages managing the trace session.

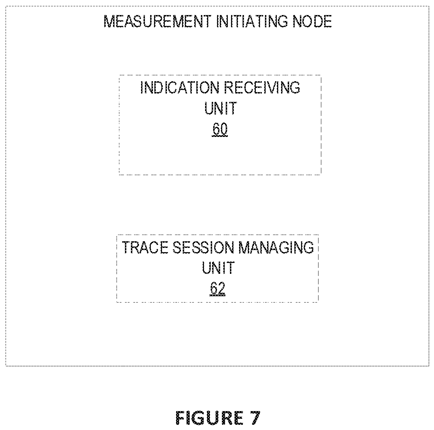

Figure 7 illustrates a schematic block diagram of a Measurement Initiating node in a wireless network according to some embodiments (for example, the wireless network shown in Figure 4). As shown, the Measurement Initiating node implements various functional means, units, or modules, *e.g*., via the processing circuitry 202 in Figure 4 and/or via software code. These functional means, units, or modules, *e.g*., for implementing the method 30 described herein, include for instance: indication receiving unit 60 and trace session managing unit 62. Indication receiving unit 60 is configured to receive, from the source network node, an indication of a pending transfer of service of the terminal to the target network node, and an indication of whether the target network node can continue the QoE Measurement. Trace session managing unit 62 is configured to, if the target network node can continue the QoE Measurement, send to the target network node one or more messages managing the trace session.

Embodiments of the present invention present numerous advantages over the prior art, and may provide one or more technical advantages. They allow QoE Measurement collection to continue across a transfer of service of a terminal from a source network node to a target network node, such as a SRNS Relocation or inter-RAT handover, by transferring trace session information. The Measuring Initiating node configuring the QoE Measurement has the option of continuing using the same trace session information, or providing the target network node with updated trace session information. In either case, following the transfer, the terminal has information such as the network address of the trace reporting entity, allowing the QoE Measurement to complete. In the future some other service measurement(s) may be introduced. Those future measurements can also be continued after relocation or handover, similarly to a QoE Measurement, by applying the teachings of the present disclosure. Other advantages may be readily available to one having skill in the art. Certain embodiments may have none, some, or all of the recited advantages.

The present invention may, of course, be carried out in other ways than those specifically set forth herein without departing from essential characteristics of the invention. The present embodiments are to be considered in all respects as illustrative and not restrictive, and all changes coming within the scope of the appended claims are intended to be embraced therein.

**Table 1: New trace session Information (bold and underlined) added to RELOCATION REQUIRED message in TS 25.413 § 9.1.9.**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | reject |
| Relocation Type | M | | 9.2.1.23 | | YES | reject |
| Cause | M | | 9.2.1.4 | | YES | ignore |
| Source ID | M | | 9.2.1.24 | | YES | ignore |
| Target ID | M | | 9.2.1.25 | | YES | reject |
| MS Classmark 2 | C-ifGSMCS target | | 9.2.1.26 | | YES | reject |
| MS Classmark 3 | C-ifGSMCS target | | 9.2.1.27 | | YES | ignore |
| Source To Target Transparent Container | C-ifUMTSta rget or ifEUTRAt arget | | 9.2.1.30A | | YES | reject |
| Old BSS To New BSS Information | O | | 9.2.1.29 | Can optionally be used if GSM target but not used for UMTS target. | YES | ignore |
| GERAN Classmark | O | | 9.2.1.57 | | YES | ignore |
| Source BSS To Target BSS Transparent Container | O | | 9.2.1.79 | Shall be included if, and only if, GSM PS domain is target. | YES | ignore |
| SRVCC HO Indication | O | | 9.2.1.88 | | YES | reject |
| CSG Id | O | | 9.2.1.85 | | YES | reject |
| Cell Access Mode | O | | 9.2.1.93 | | YES | reject |
| rSRVCC HO Indication | O | | 9.2.1.114 | | YES | reject |
| **Trace Session Information** | **O** | | **Refer to table 2** | | **YES** | **ignore** |

**Table 2: An example of Trace Session Information IE related parameters**

| **IE/Group Name** | **Presence** | **Range** | **IE type and reference** | **Semantics description** | **Criticality** | **Assigned Criticality** |
|---|---|---|---|---|---|---|
| Trace Reference | M | | 9.2.1.8 | | Yes | ignore |
| Trace Activation Indicator | M | | ENUMERAT ED ( Activated, Deactivated) | | Yes | ignore |
| Equipments To Be Traced | C-IfActivated | | 9.2.1.65 | | Yes | ignore |
| Trace Recording Session Reference | O | | 9.2.1.67 | | YES | ignore |
| IMSI | O | | OCTET STRING (SIZE (3..8)) | | YES | ignore |
| Trace Collection Entity IP Address | O | | Transport Layer Address 9.2.2.1 | | YES | ignore |

**Table 3: New Information (bold and underlined) added to RELOCATION REQUIRED message in 3GPP TS 25.413, § 9.2.1.129.**

| **IE/Group Name** | **Presence** | **Range** | **IE type and reference** | **Semantics description** | **Criticality** | **Assigned Criticality** |
|---|---|---|---|---|---|---|
| Area scope for UE application layer measurement configuration | M | | Area scope for UE application layer measurement configuration 9.2.1.128 | | YES | ignore |
| **Trace Reference** | **M** | | **9.2.1.8** | | **YES** | **ignore** |
| **Trace Propaqation Parameters** | **O** | | **9.2.1.68** | **Optional for UTRAN. Not applicable to GERAN lu Mode.** | **YES** | **ignore** |
| Trace Collection Entity IP Address | O | | 9.2.2.1 | | YES | ignore |

## Claims

1. A method (10), performed by a source network node (200) operative in a wireless communication network (220), of transferring service of a terminal (210) (210) to a target network node (200), wherein the source network node (200) has a Quality of Experience QoE Measurement configured for the terminal (210) and a trace session related to the QoE Measurement, the trace session being managed in the source network node (200) by a Measurement Initiating node (200), **characterized by**:
in response to a pending transfer of service of the terminal (210) from the source network node (200) to a target network node (200), sending (12) trace session information related to the QoE Measurement to the target network node (200);
receiving (14) from the target network node (200), feedback indicating whether the QoE Measurement will be continued or terminated;
notifying (16) the Measurement Initiating node (200) whether the QoE Measurement will be continued by the terminal (210) or terminated following the transfer of service of the terminal (210) from the source to the target network node (200); and
prior to sending (12) trace session information related to the QoE Measurement to the target network node (200), sending a message to the Measurement Initiating node (200) informing the Measurement Initiating node (200) of the transfer of servicing.

2. The method (10) of claim 1 wherein the transfer of service of the terminal (210) is a handover from the source network node (200) to the target network node (200); or wherein the transfer of service of the terminal (210) from the source network node (200) to the target network node (200) is a Serving Radio Network Subsystem SRNS relocation.

3. The method (10) of claim 2 wherein the handover is an inter-RAT handover wherein the target network node (200) operates according to a different Radio Access Technology than the source network node (200).

4. The method (10) of any preceding claim wherein the trace session information includes one or more of a trace reference identifying a trace session, an identity of the terminal (210), trace propagation parameters indicating trace parameters to activate a trace session by a trace parameter propagation, a trace recording session reference, and a network address for trace collection.

5. The method (10) of any preceding claim, wherein the Measurement Initiating node (200) participates in the service transfer signaling, and wherein notifying (16) the Measurement Initiating node (200) whether the QoE Measurement will be continued or terminated by the terminal (210) following the transfer of servicing comprises sending trace session information related to the QoE Measurement to the target network node (200).

6. The method (10) of any one of claims 1 to 5 further **characterized by**:
in response to informing the Measurement Initiating node (200) of the transfer of service, receiving from the Measurement Initiating node (200) modified the trace session information related to the terminal (210)'s QoE Measurement; and
wherein sending (12) trace session information related to the QoE Measurement to the target network node (200) comprises sending to the target network node (200) the trace session information modified by the Measurement Initiating node (200).

7. A method (20), performed by a target network node (200) operative in a wireless communication network (220), of transferring service of a terminal (210) from a source network node (200), wherein the source network node (200) has a Quality of Experience QoE Measurement configured for the terminal (210) and a trace session related to the QoE Measurement, the trace session being managed in the source network node (200) by a Measurement Initiating node (200), **characterized by**:
receiving (22) trace session information related to the QoE Measurement from the source network node (200);
determining (24) whether to continue the QoE Measurement after the transfer;
sending (26) to the source network node (200), feedback indicating whether the QoE Measurement will be continued or terminated; and
if the QoE Measurement is to be continued, receiving (28) from the Measurement Initiating node (200) one or more messages managing the trace session; and
wherein the trace session information related to the QoE Measurement received from the source network node (200) was modified by the Measurement Initiating node (200) in response to the source network node (200) notifying the Measurement Initiating node (200) of the pending transfer of service of the terminal (210).

8. The method (20) of claim 7 wherein the transfer of service of the terminal (210) is a handover from the source network node (200) to the target network node (200); or wherein the transfer of service of the terminal (210) from the source network node (200) to the target network node (200) is a Serving Radio Network Subsystem SRNS relocation.

9. The method (20) of claim 8 wherein the handover is an inter-RAT handover wherein the source network node (200) operates according to a different Radio Access Technology than the target network node (200).

10. The method (20) of any of claims 7-9 wherein the trace session information includes one or more of a trace reference identifying a trace session, an identity of the terminal (210), trace propagation parameters indicating trace parameters to activate a trace session by a trace parameter propagation, a trace recording session reference, and a network address for trace collection.

11. The method (20) of any one of claims claim 7 to 10 further **characterized by**, if the QoE Measurement is to be continued, receiving a trace deactivation from the Measurement Initiating node (200) using the trace session reference.

12. The method (20) of any one of claims 7 to 10 further **characterized by**, if the QoE Measurement is to be continued, receiving a trace deactivation from the Measurement Initiating node (200) using the terminal (210) identity.

13. A method (30), performed by Measurement Initiating node (200) operative in a wireless communication network (220), of transferring service of a terminal (210) from a source network node (200) to a target network node (200), wherein the source network node (200) has a Quality of Experience QoE Measurement configured for the terminal (210) and a trace session related to the QoE, the trace session being managed in the source network node (200) by the Measurement Initiating node (200), **characterized by**:
receiving (32), from the source network node (200), an indication of a pending transfer of service of the terminal (210) to the target network node (200), and an indication of whether the target network node (200) can continue the QoE Measurement; and
if the target network node (200) can continue the QoE Measurement, sending (34) to the target network node (200) one or more messages managing the trace session; and
prior to managing the trace session at the target network node (200), sending to the source node (200) modified trace session information for the source network node (200) to send to the target network node (200).

14. The method (30) of claim 13 further **characterized by**, after the transfer of service of the terminal (210) from the source to the target network node (200), deactivating the trace session at the target network node (200).

15. The method (30) of claim 14 wherein deactivating the trace session comprises deactivating the trace session using a trace session reference.

16. The method (30) of claim 14 wherein deactivating the trace session comprises deactivating the trace session using the terminal (210) identity.

17. A source network node (200) operative in a wireless communication network (220) and operative to provide wireless communication service to a terminal (210) prior to a transfer of service of the terminal (210) to a target network node (200), wherein the source network node (200) has a Quality of Experience QoE Measurement configured for the terminal (210) and a trace session related to the QoE Measurement, the trace session being managed in the source network node (200) by a Measurement Initiating node (200), the source network node (200) comprising:
a transceiver (201) operative to exchange wireless messages with the terminal (210) and other network nodes (200); and
processing circuitry (202) operatively connected to the transceiver (201), the processing circuitry (202) **characterized by** being operative to:
in response to a pending transfer of service of the terminal (210) from the source network node (200) to a target network node (200), send (12) trace session information related to the QoE Measurement to the target network node (200);
receive (14) from the target network node (200), feedback indicating whether the QoE Measurement will be continued or terminated;
notify (16) the Measurement Initiating node (200) whether the QoE Measurement will be continued by the terminal (210) or terminated following the transfer of service of the terminal (210) from the source to the target network node (200);
and prior to sending (12) trace session information related to the QoE Measurement to the target network node (200), sending a message to the Measurement Initiating node (200) informing the Measurement Initiating node (200) of the transfer of servicing.

18. The source network node (200) of claim 17 wherein the processing circuitry (202) is further **characterized by** being operative to:
in response to informing the Measurement Initiating node (200) of the transfer of service of the terminal (210), receive from the Measurement Initiating node (200) modified the trace session information related to the QoE Measurement; and
wherein the processing circuitry (202) is operative to send (12) trace session information related to the QoE Measurement to the target network node (200) by sending to the target network node (200) the trace session information modified by the Measurement Initiating node (200).

19. A target network node (200) operative in a wireless communication network (220) and operative to provide wireless communication service to a terminal (210) following a transfer of service of the terminal (210) from a source network node (200), wherein the source network node (200) has a Quality of Experience QoE Measurement configured for the terminal (210) and a trace session related to the QoE Measurement, the trace session being managed in the source network node (200) by a Measurement Initiating node (200), the target network node (200) comprising:
a transceiver (201) operative to exchange wireless messages with the terminal (210) and other network nodes (200); and
processing circuitry (202) operatively connected to the transceiver (201), the processing circuitry (202) **characterized by** being operative to:
receive (22) trace session information related to the QoE Measurement from the source network node (200);
determine (24) whether to continue the QoE Measurement after the transfer;
send (26) to the source network node (200), feedback indicating whether the QoE Measurement will be continued or terminated; and
if the QoE Measurement is to be continued, receive (28) from the Measurement Initiating node (200) one or more messages managing the trace session;wherein the trace session information related to the QoE Measurement received from the source network node (200) was modified by the Measurement Initiating node (200) in response to the source network node (200) notifying the Measurement Initiating node (200) of the pending transfer of service of the terminal (210).

20. The target network node (200) of claim 19 wherein the processing circuitry (202) is further **characterized by** being operative to, if the QoE Measurement is to be continued, receive a trace deactivation from the Measurement Initiating node (200) using the trace session reference; orwherein the processing circuitry (202) is further **characterized by** being operative to, if the QoE Measurement is to be continued, receive a trace deactivation from the Measurement Initiating node (200) using the terminal (210) identity.

21. A Measurement Initiating node (200) operative in a wireless communication network (220) comprising at least a source network node (200) operative to provide wireless communication service to a terminal (210) prior to a transfer of service of the terminal (210), and a target network node (200) operative to provide wireless communication service to the terminal (210) following the transfer of service of the terminal (210), wherein the source network node (200) has a Quality of Experience QoE Measurement configured for the terminal (210) and a trace session related to the QoE Measurement, the trace session being managed in the source network node (200), the Measurement Initiating node (200) comprising:
communication circuitry (201) operative to exchange messages with other network nodes (200); and
processing circuitry (202) operatively connected to the communication circuitry (201), the processing circuitry (202) **characterized by** being operative to:
receive (32), from the source network node (200), an indication of a pending transfer of service of the terminal (210) to the target network node (200), and an indication of whether the target network node (200) can continue the QoE Measurement;
if the target network node (200) can continue the QoE Measurement, send (34) to the target network node (200) one or more messages managing the trace session; and
prior to managing the trace session at the target network node (200), send to the source node (200) modified trace session information for the source network node (200) to send to the target network node (200).

22. The Measurement Initiating node (200) of claim 21 wherein the Measurement Initiating node (200) participates in the transfer of service of the terminal (210), and wherein the modified trace session information is sent to the source network node (200) in a RELOCATION REQUEST message; or
wherein the Measurement Initiating node (200) does not participate in the transfer of service of the terminal (210), and wherein the modified trace session information is sent to the source network node (200) in a handshaking message.

## Patentansprüche

1. Verfahren (10), das von einem Ursprungsnetzwerkknoten (200) durchgeführt wird, der in einem drahtlosen Kommunikationsnetzwerk (220) operiert, zur Übertragung einer Versorgung eines Endgeräts (210) an einen Zielnetzwerkknoten (200), wobei der Ursprungsnetzwerkknoten (200) eine für das Endgerät (210) konfigurierte Erfahrungsqualitäts-,QoE-,Messung und eine Verfolgungssitzung in Bezug auf die QoE-Messung aufweist, wobei die Verfolgungssitzung im Ursprungsnetzwerkknoten (200) von einem Messungsauslösungsknoten (200) verwaltet wird, **gekennzeichnet durch**:
Senden (12) von Verfolgungssitzungsinformationen in Bezug auf die QoE-Messung an den Zielnetzwerkknoten (200) in Reaktion auf eine bevorstehende Übertragung einer Versorgung des Endgeräts (210) vom Ursprungsnetzwerkknoten (200) an den Zielnetzwerkknoten (200);
Empfangen (14) einer Rückmeldung, die anzeigt, ob die QoE-Messung fortgesetzt oder beendet wird, vom Zielnetzwerkknoten (200);
Melden (16) an den Messungsauslösungsknoten (200), ob die QoE-Messung durch das Endgerät (210) nach der Übertragung der Versorgung des Endgeräts (210) vom Ursprungs- an den Zielnetzwerkknoten (200) fortgesetzt oder beendet wird; und
Senden einer Nachricht an den Messungsauslösungsknoten (200), die den Messungsauslösungsknoten (200) über die Versorgungsübertragung informiert, vor dem Senden (12) von Verfolgungssitzungsinformationen in Bezug auf die QoE-Messung an den Zielnetzwerkknoten (200).

2. Verfahren (10) nach Anspruch 1, wobei die Übertragung der Versorgung des Endgeräts (210) ein Handover vom Ursprungsnetzwerkknoten (200) an den Zielnetzwerkknoten (200) ist; oder
wobei die Übertragung der Versorgung des Endgeräts (210) vom Ursprungsnetzwerkknoten (200) an den Zielnetzwerkknoten (200) eine Verlegung eines versorgenden Funknetzwerksubsystems, SRNS, ist.

3. Verfahren (10) nach Anspruch 2, wobei das Handover ein Inter-RAT ist, wobei der Zielnetzwerkknoten (200) gemäß einer anderen Funkzugangstechnologie als der Ursprungsnetzwerkknoten (200) funktioniert.

4. Verfahren (10) nach einem der vorhergehenden Ansprüche, wobei die Verfolgungssitzungsinformationen eines oder mehrere von einer Verfolgungsreferenz, die eine Verfolgungssitzung identifiziert, einer Kennung des Endgeräts (210), Verfolgungspropagationsparametern, die Verfolgungsparameter zum Aktivieren einer Verfolgungssitzung durch eine Verfolgungsparameterpropagation anzeigen, einer Verfolgungsaufzeichnungssitzungsreferenz und einer Netzwerkadresse zur Verfolgungserfassung umfassen.

5. Verfahren (10) nach einem der vorhergehenden Ansprüche, wobei der Messungsauslösungsknoten (200) an der Versorgungsübertragungssignalisierung teilnimmt, und wobei das Melden (16) an den Messungsauslösungsknoten (200), ob die QoE-Messung durch das Endgerät (210) nach der Übertragung der Versorgungsübertragung fortgesetzt oder beendet wird, ein Senden von Verfolgungssitzungsinformationen in Bezug auf die QoE-Messung an den Zielnetzwerkknoten (200) umfasst.

6. Verfahren (10) nach einem der Ansprüche 1 bis 5, ferner **gekennzeichnet durch**:
Empfangen modifizierter Verfolgungssitzungsinformationen in Bezug auf die QoE-Messung des Endgeräts (210) vom Messungsauslösungsknoten (200) in Reaktion auf das Informieren des Messungsauslösungsknotens (200) über die Versorgungsübertragung; und
wobei das Senden (12) von Verfolgungssitzungsinformationen in Bezug auf die QoE-Messung an den Zielnetzwerkknoten (200) ein Senden der vom Messungsauslösungsknoten (200) modifizierten Verfolgungssitzungsinformationen an den Zielnetzwerkknoten (200) umfasst.

7. Verfahren (20), das von einem Zielnetzwerkknoten (200) durchgeführt wird, der in einem drahtlosen Kommunikationsnetzwerk (220) operiert, zur Übertragung einer Versorgung eines Endgeräts (210) von einem Ursprungsnetzwerkknoten (200), wobei der Ursprungsnetzwerkknoten (200) eine für das Endgerät (210) konfigurierte Erfahrungsqualitäts-,QoE-,Messung und eine Verfolgungssitzung in Bezug auf die QoE-Messung aufweist, wobei die Verfolgungssitzung im Ursprungsnetzwerkknoten (200) von einem Messungsauslösungsknoten (200) verwaltet wird, **gekennzeichnet durch**:
Empfangen (22) von Verfolgungssitzungsinformationen in Bezug auf eine QoE-Messung vom Ursprungsnetzwerkknoten (200) ;
Bestimmen (24), ob die QoE-Messung nach der Übertragung fortgesetzt werden soll;
Senden (26) einer Rückmeldung, die anzeigt, ob die QoE-Messung fortgesetzt oder beendet wird, an den Ursprungsnetzwerkknoten (200); und
Empfangen (28), wenn die QoE-Messung fortgesetzt werden soll, einer oder mehrerer Nachrichten vom Messungsauslösungsknoten (200), um die Verfolgungssitzung zu verwalten; und
wobei die Verfolgungssitzungsinformationen in Bezug auf die vom Ursprungsnetzwerkknoten (200) empfangene QoE-Messung vom Messungsauslösungsknoten (200) in Reaktion darauf modifiziert wurde, dass der Ursprungsnetzwerkknoten (200) die bevorstehende Übertragung der Versorgung des Endgeräts (210) an den Messungsauslösungsknoten (200) meldete.

8. Verfahren (20) nach Anspruch 7, wobei die Übertragung der Versorgung des Endgeräts (210) ein Handover vom Ursprungsnetzwerkknoten (200) an den Zielnetzwerkknoten (200) ist; oder
wobei die Übertragung der Versorgung des Endgeräts (210) vom Ursprungsnetzwerkknoten (200) an den Zielnetzwerkknoten (200) eine Verlegung eines versorgenden Funknetzwerksubsystems SRNS, ist.

9. Verfahren (20) nach Anspruch 8, wobei das Handover ein Inter-RAT ist, wobei der Ursprungsnetzwerkknoten (200) gemäß einer anderen Funkzugangstechnologie als der Zielnetzwerkknoten (200) funktioniert.

10. Verfahren (20) nach einem der Ansprüche 7 bis 9, wobei die Verfolgungssitzungsinformationen eines oder mehrere von einer Verfolgungsreferenz, die eine Verfolgungssitzung identifiziert, einer Kennung des Endgeräts (210), Verfolgungspropagationsparametern, die Verfolgulngsparameter zum Aktivieren einer
Verfolgungssitzung durch eine Verfolgungsparameterpropagation anzeigen, einer Verfolgungsaufzeichnungssitzungsreferenz und einer Netzwerkadresse zur Verfolgungserfassung umfassen.

11. Verfahren (20) nach einem der Ansprüche 7 bis 10, ferner **gekennzeichnet durch** Empfangen einer Verfolgungsdeaktivierung vom Messungsauslösungsknoten (200) unter Verwendung der Verfolgungssitzungsreferenz, wenn die QoE-Messung fortgesetzt werden soll.

12. Verfahren (20) nach einem der Ansprüche 7 bis 10, ferner **gekennzeichnet durch** Empfangen einer Verfolgungsdeaktivierung vom Messungsauslösungsknoten (200) unter Verwendung der Kennung des Endgeräts (210), wenn die QoE-Messung fortgesetzt werden soll.

13. Verfahren (30), das von einem Messungsauslösungsknoten (200) durchgeführt wird, der in einem drahtlosen Kommunikationsnetzwerk (220) operiert, zur Übertragung einer Versorgung eines Endgeräts (210) von einem Ursprungsnetzwerkknoten (200) an einen Zielnetzwerkknoten (200), wobei der Ursprungsnetzwerkknoten (200) eine für das Endgerät (210) konfigurierte Erfahrungsqualitäts-,QoE-,Messung und eine Verfolgungssitzung in Bezug auf die QoE-Messung aufweist, wobei die Verfolgungssitzung im Ursprungsnetzwerkknoten (200) vom Messungsauslösungsknoten (200) verwaltet wird, **gekennzeichnet durch**:
Empfangen (32) einer Anzeige einer bevorstehenden Übertragung einer Versorgung des Endgeräts (210) an den Zielnetzwerkknoten (200) und einer Anzeige dessen, ob der Zielnetzwerkknoten (200) die QoE-Messung fortsetzen kann, vom Ursprungsnetzwerkknoten (200); und
Senden (34), wenn der Zielnetzwerkknoten (200) die QoE-Messung fortsetzen kann, einer oder mehrerer Nachrichten an den Zielnetzwerkknoten (200), um die Verfolgungssitzung zu verwalten; und
Senden modifizierter Verfolgungssitzungsinformationen für den Ursprungsnetzwerkknoten (200) an den Ursprungsnetzwerkknoten (200) zum Senden an den Zielnetzwerkknoten (200) vor dem Verwalten der Verfolgungssitzung am Zielnetzwerkknoten (200).

14. Verfahren (30) nach Anspruch 13, ferner **gekennzeichnet durch** Deaktivieren der Verfolgungssitzung am Zielnetzwerkknoten (200) nach der Übertragung der Versorgung des Endgeräts (210) vom Ursprungs- an den Zielnetzwerkknoten (200).

15. Verfahren (30) nach Anspruch 14, wobei das Deaktivieren der Verfolgungssitzung ein Deaktivieren der Verfolgungssitzung unter Verwendung einer Verfolgungssitzungsreferenz umfasst.

16. Verfahren (30) nach Anspruch 14, wobei das Deaktivieren der Verfolgungssitzung ein Deaktivieren der Verfolgungssitzung unter Verwendung der Kennung des Endgeräts (210) umfasst.

17. Ursprungsnetzwerkknoten (200), der in einem drahtlosen Kommunikationsnetzwerk (220) operiert und so ausgelegt ist, dass er drahtlose Kommunikationsversorgung für ein Endgerät (210) vor einer Übertragung der Versorgung des Endgeräts (210) an einen Zielnetzwerkknoten (200) bereitstellt, wobei der Ursprungsnetzwerkknoten (200) eine für das Endgerät (210) konfigurierte Erfahrungsqualitäts-,QoE-,Messung und eine Verfolgungssitzung in Bezug auf die QoE-Messung aufweist, wobei die Verfolgungssitzung im Ursprungsnetzwerkknoten (200) von einem Messungsauslösungsknoten (200) verwaltet wird, wobei der Ursprungsnetzwerkknoten (200) umfasst:
einen Sendeempfänger (201), der zum Austauschen von Drahtlosnachrichten mit dem Endgerät (210) und anderen Netzwerkknoten (200) ausgelegt ist; und
Verarbeitungsschaltungsanordnung (202), die mit dem Sendeempfänger (201) funktionell gekoppelt ist, wobei die Verarbeitungsschaltungsanordnung (202) **dadurch gekennzeichnet ist, dass** sie ausgelegt ist zum:
Senden (12) von Verfolgungssitzungsinformationen in Bezug auf die QoE-Messung an den Zielnetzwerkknoten (200) in Reaktion auf eine bevorstehende Übertragung einer Versorgung des Endgeräts (210) vom Ursprungsnetzwerkknoten (200) an den Zielnetzwerkknoten (200);
Empfangen (14) einer Rückmeldung, die anzeigt, ob die QoE-Messung fortgesetzt oder beendet wird, vom Zielnetzwerkknoten (200);
Melden (16) an den Messungsauslösungsknoten (200), ob die QoE-Messung durch das Endgerät (210) nach der Übertragung der Versorgung des Endgeräts (210) vom Ursprungs- an den Zielnetzwerkknoten (200) fortgesetzt oder beendet wird; und
Senden einer Nachricht an den Messungsauslösungsknoten (200), die den Messungsauslösungsknoten (200) über die Versorgungsübertragung informiert, vor dem Senden (12) von Verfolgungssitzungsinformationen in Bezug auf die QoE-Messung an den Zielnetzwerkknoten (200).

18. Ursprungsnetzwerkknoten (200) nach Anspruch 17, wobei die Verarbeitungsschaltungsanordnung (202) ferner **dadurch gekennzeichnet ist, dass** sie ausgelegt ist zum:
Empfangen modifizierter Verfolgungssitzungsinformationen in Bezug auf die QoE-Messung vom Messungsauslösungsknoten (200) in Reaktion auf das Informieren des Messungsauslösungsknotens (200) über die Übertragung der Versorgung des Endgeräts (210); und
wobei die Verarbeitungsschaltungsanordnung (202) zum Senden (12) von Verfolgungssitzungsinformationen in Bezug auf die QoE-Messung an den Zielnetzwerkknoten (200) durch Senden der vom Messungsauslösungsknoten (200) modifizierten Verfolgungssitzungsinformationen an den Zielnetzwerkknoten (200) ausgelegt ist.

19. Zielnetzwerkknoten (200), der in einem drahtlosen Kommunikationsnetzwerk (220) operiert und so ausgelegt ist, dass er drahtlose Kommunikationsversorgung für ein Endgerät (210) nach einer Übertragung der Versorgung des Endgeräts (210) von einem Ursprungsnetzwerkknoten (200) bereitstellt, wobei der Ursprungsnetzwerkknoten (200) eine für das Endgerät (210) konfigurierte Erfahrungsqualitäts-,QoE-,Messung und eine Verfolgungssitzung in Bezug auf die QoE-Messung aufweist, wobei die Verfolgungssitzung im Ursprungsnetzwerkknoten (200) von einem Messungsauslösungsknoten (200) verwaltet wird, wobei der Zielnetzwerkknoten (200) umfasst:
einen Sendeempfänger (201), der zum Austauschen von Drahtlosnachrichten mit dem Endgerät (210) und anderen Netzwerkknoten (200) ausgelegt ist; und
Verarbeitungsschaltungsanordnung (202), die mit dem Sendeempfänger (201) funktionell gekoppelt ist, wobei die Verarbeitungsschaltungsanordnung (202) **dadurch gekennzeichnet ist, dass** sie ausgelegt ist zum:
Empfangen (22) von Verfolgungssitzungsinformationen in Bezug auf eine QoE-Messung vom Ursprungsnetzwerkknoten (200) ;
Bestimmen (24), ob die QoE-Messung nach der Übertragung fortgesetzt werden soll;
Senden (26) einer Rückmeldung, die anzeigt, ob die QoE-Messung fortgesetzt oder beendet wird, an den Ursprungsnetzwerkknoten (200); und
Empfangen (28), wenn die QoE-Messung fortgesetzt werden soll, einer oder mehrerer Nachrichten vom Messungsauslösungsknoten (200), um die Verfolgungssitzung zu verwalten;
wobei die Verfolgungssitzungsinformationen in Bezug auf die vom Ursprungsnetzwerkknoten (200) empfangene QoE-Messung vom Messungsauslösungsknoten (200) in Reaktion darauf modifiziert wurde, dass der Ursprungsnetzwerkknoten (200) die bevorstehende Übertragung der Versorgung des Endgeräts (210) an den Messungsauslösungsknoten (200) meldete.

20. Zielnetzwerkknoten (200) nach Anspruch 19, wobei die Verarbeitungsschaltungsanordnung (202) ferner **dadurch gekennzeichnet ist, dass** sie so ausgelegt ist, dass sie eine Verfolgungsdeaktivierung vom Messungsauslösungsknoten (200) unter Verwendung der Verfolgungssitzungsreferenz empfängt, wenn die QoE-Messung fortgesetzt werden soll; oder wobei die Verarbeitungsschaltungsanordnung (202) ferner **dadurch gekennzeichnet ist, dass** sie so ausgelegt ist, dass sie eine Verfolgungsdeaktivierung vom Messungsauslösungsknoten (200) unter Verwendung der Kennung des Endgeräts (210) empfängt, wenn die QoE-Messung fortgesetzt werden soll.

21. Messungsauslösungsknoten (200), der in einem drahtlosen Kommunikationsnetzwerk (220) operiert, das mindestens einen Ursprungsnetzwerkknoten (200), der zum Bereitstellen von drahtloser Kommunikationsversorgung für ein Endgerät (210) vor einer Übertragung der Versorgung des Endgeräts (210) ausgelegt ist, und einen Zielnetzwerkknoten (200) umfasst, der zum Bereitstellen von drahtloser Kommunikationsversorgung für ein Endgerät (210) nach einer Übertragung der Versorgung des Endgeräts (210) ausgelegt ist, wobei der Ursprungsnetzwerkknoten (200) eine für das Endgerät (210) konfigurierte Erfahrungsqualitäts-,QoE-,Messung und eine Verfolgungssitzung in Bezug auf die QoE-Messung aufweist, wobei die Verfolgungssitzung im Ursprungsnetzwerkknoten (200) verwaltet wird, und der Messungsauslösungsknoten (200) umfasst:
Kommunikationsschaltungsanordnung (201), die zum Austauschen von Nachrichten mit anderen Netzwerkknoten (200) ausgelegt ist; und
Verarbeitungsschaltungsanordnung (202), die mit der Kommunikationsschaltungsanordnung (201) funktionell gekoppelt ist, wobei die Verarbeitungsschaltungsanordnung (202) **dadurch gekennzeichnet ist, dass** sie ausgelegt ist zum:
Empfangen (32) einer Anzeige einer bevorstehenden Übertragung der Versorgung des Endgeräts (210) an den Zielnetzwerkknoten (200) und einer Anzeige dessen, ob der Zielnetzwerkknoten (200) die QoE-Messung fortsetzen kann, vom Ursprungsnetzwerkknoten (200); und
Senden (34), wenn der Zielnetzwerkknoten (200) die QoE-Messung fortsetzen kann, einer oder mehrerer Nachrichten an den Zielnetzwerkknoten (200), um die Verfolgungssitzung zu verwalten; und
Senden modifizierter Verfolgungssitzungsinformationen für den Ursprungsnetzwerkknoten (200) an den Ursprungsnetzwerkknoten (200) zum Senden an den Zielnetzwerkknoten (200) vor dem Verwalten der Verfolgungssitzung am Zielnetzwerkknoten (200).

22. Messungsauslösungsknoten (200) nach Anspruch 21, wobei der Messungsauslösungsknoten (200) an der Übertragung der Versorgung des Endgeräts (210) teilnimmt, und wobei die modifizierten Verfolgungssitzungsinformationen in einer RELOCATION REQUEST-Nachricht an den Ursprungsnetzwerkknoten (200) gesendet werden; oder
wobei der Messungsauslösungsknoten (200) nicht an der Übertragung der Versorgung des Endgeräts (210) teilnimmt, und wobei die modifizierten Verfolgungssitzungsinformationen in einer Handshake-Nachricht an den Ursprungsnetzwerkknoten (200) gesendet werden.

## Revendications

1. Procédé (10), réalisé par un nœud de réseau source (200) opérationnel dans un réseau de communication sans fil (220), pour transférer un service d'un terminal (210) à un nœud de réseau cible (200), dans lequel le nœud de réseau source (200) a une mesure de qualité d'expérience, QoE, configurée pour le terminal (210) et une session de trace relative à la mesure de QoE, la session de trace étant gérée dans le nœud de réseau source (200) par un nœud de lancement de mesure (200), **caractérisé par** :
en réponse à un transfert imminent du service du terminal (210) depuis le nœud de réseau source (200) à un nœud de réseau cible (200), l'envoi (12) d'informations de session de trace relatives à la mesure de QoE au nœud de réseau cible (200) ;
la réception (14), depuis le nœud de réseau cible (200), d'une rétroaction indiquant si la mesure de QoE est continuée ou terminée ;
la notification (16), au nœud de lancement de mesure (200), si la mesure de QoE est continuée par le terminal (210) ou terminée à la suite du transfert du service du terminal (210) depuis le nœud de réseau source au nœud de réseau cible (200) ; et
avant l'envoi (12) d'informations de session de trace relatives à la mesure de QoE au nœud de réseau cible (200), l'envoi d'un message au nœud de lancement de mesure (200) informant le nœud de lancement de mesure (200) du transfert du service.

2. Procédé (10) selon la revendication 1, dans lequel le transfert du service du terminal (210) est un transfert intercellulaire depuis le nœud de réseau source (200) au nœud de réseau cible (200) ; ou dans lequel le transfert du service du terminal (210) depuis le nœud de réseau source (200) au nœud de réseau cible (200) est une relocalisation de sous-système de réseau radio de desserte, SRNS.

3. Procédé (10) selon la revendication 2, dans lequel le transfert intercellulaire est un transfert intercellulaire inter-RAT dans lequel le nœud de réseau cible (200) fonctionne selon une technologie d'accès radio différente de celle du nœud de réseau source (200) .

4. Procédé (10) selon l'une quelconque des revendications précédentes, dans lequel les informations de session de trace incluent un ou plusieurs parmi une référence de trace identifiant une session de trace, une identité du terminal (210), des paramètres de propagation de trace indiquant des paramètres de trace pour activer une session de trace par une propagation de paramètre de trace, une référence de session d'enregistrement de trace, et une adresse de réseau pour une collecte de trace.

5. Procédé (10) selon l'une quelconque des revendications précédentes, dans lequel le nœud de lancement de mesure (200) participe à la signalisation de transfert de service, et dans lequel la notification (16), au nœud de lancement de mesure (200), si la mesure de QoE est continuée ou terminée par le terminal (210) à la suite du transfert du service comprend l'envoi d'informations de session de trace relatives à la mesure de QoE au nœud de réseau cible (200).

6. Procédé (10) selon l'une quelconque des revendications 1 à 5, **caractérisé en outre par** :
en réponse à l'information du nœud de lancement de mesure (200) du transfert du service, la réception, depuis le nœud de lancement de mesure (200), des informations de session de trace modifiées relatives à la mesure de QoE du terminal (210) ; et
dans lequel l'envoi (12) d'informations de session de trace relatives à la mesure de QoE au nœud de réseau cible (200) comprend l'envoi, au nœud de réseau cible (200), des informations de session de trace modifiées par le nœud de lancement de mesure (200).

7. Procédé (20), réalisé par un nœud de réseau cible (200) opérationnel dans un réseau de communication sans fil (220), pour transférer un service d'un terminal (210) depuis un nœud de réseau source (200), dans lequel le nœud de réseau source (200) a une mesure de qualité d'expérience, QoE, configurée pour le terminal (210) et une session de trace relative à la mesure de QoE, la session de trace étant gérée dans le nœud de réseau source (200) par un nœud de lancement de mesure (200), **caractérisé par** :
la réception (22) d'informations de session de trace relatives à la mesure de QoE depuis le nœud de réseau source (200) ;
la détermination (24) s'il faut ou non continuer la mesure de QoE après le transfert ;
l'envoi (26), au nœud de réseau source (200), d'une rétroaction indiquant si la mesure de QoE est continuée ou terminée ; et
si la mesure de QoE doit être continuée, la réception (28), depuis le nœud de lancement de mesure (200), d'un ou plusieurs messages gérant la session de trace ; et
dans lequel les informations de session de trace relatives à la mesure de QoE reçues depuis le nœud de réseau source (200) ont été modifiées par le nœud de lancement de mesure (200) en réponse à la notification au nœud de lancement de mesure (200), par le nœud de réseau source (200), du transfert imminent du service du terminal (210).

8. Procédé (20) selon la revendication 7, dans lequel le transfert du service du terminal (210) est un transfert intercellulaire depuis le nœud de réseau source (200) au nœud de réseau cible (200) ; ou dans lequel le transfert du service du terminal (210) depuis le nœud de réseau source (200) au nœud de réseau cible (200) est une relocalisation de sous-système de réseau radio de desserte, SRNS.

9. Procédé (20) selon la revendication 8, dans lequel le transfert intercellulaire est un transfert intercellulaire inter-RAT dans lequel le nœud de réseau source (200) fonctionne selon une technologie d'accès radio différente de celle du nœud de réseau cible (200).

10. Procédé (20) selon l'une quelconque des revendications 7 à 9, dans lequel les informations de session de trace incluent un ou plusieurs parmi une référence de trace identifiant une session de trace, une identité du terminal (210), des paramètres de propagation de trace indiquant des paramètres de trace pour activer une session de trace par une propagation de paramètre de trace, une référence de session d'enregistrement de trace, et une adresse de réseau pour une collecte de trace.

11. Procédé (20) selon l'une quelconque des revendications 7 à 10, **caractérisé en outre par**, si la mesure de QoE doit être continuée, la réception d'une désactivation de trace depuis le nœud de lancement de mesure (200) en utilisant la référence de session de trace.

12. Procédé (20) selon l'une quelconque des revendications 7 à 10, **caractérisé en outre par**, si la mesure de QoE doit être continuée, la réception d'une désactivation de trace depuis le nœud de lancement de mesure (200) en utilisant l'identité de terminal (210).

13. Procédé (30), réalisé par un nœud de lancement de mesure (200) opérationnel dans un réseau de communication sans fil (220), pour transférer un service d'un terminal (210) depuis un nœud de réseau source (200) à un nœud de réseau cible (200), dans lequel le nœud de réseau source (200) a une mesure de qualité d'expérience, QoE, configurée pour le terminal (210) et une session de trace relative à la mesure de QoE, la session de trace étant gérée dans le nœud de réseau source (200) par le nœud de lancement de mesure (200), **caractérisé par** :
la réception (32), depuis le nœud de réseau source (200), d'une indication d'un transfert imminent du service du terminal (210) au nœud de réseau cible (200), et d'une indication indiquant si le nœud de réseau cible (200) peut continuer la mesure de QoE ; et
si le nœud de réseau cible (200) peut continuer la mesure de QoE, l'envoi (34), au nœud de réseau cible (200), d'un ou plusieurs messages gérant la session de trace ; et
avant la gestion de la session de trace au nœud de réseau cible (200), l'envoi, au nœud de réseau source (200), d'informations de session de trace modifiées pour que le nœud de réseau source (200) les envoie au nœud de réseau cible (200).

14. Procédé (30) selon la revendication 13, **caractérisé en outre par**, après le transfert du service du terminal (210) depuis le nœud de réseau source au nœud de réseau cible (200), la désactivation de la session de trace au nœud de réseau cible (200).

15. Procédé (30) selon la revendication 14, dans lequel la désactivation de la session de trace comprend la désactivation de la session de trace en utilisant une référence de session de trace.

16. Procédé (30) selon la revendication 14, dans lequel la désactivation de la session de trace comprend la désactivation de la session de trace en utilisant l'identité de terminal (210).

17. Nœud de réseau source (200) opérationnel dans un réseau de communication sans fil (220) et opérationnel pour fournir un service de communication sans fil à un terminal (210) avant un transfert du service du terminal (210) à un nœud de réseau cible (200), dans lequel le nœud de réseau source (200) a une mesure de qualité d'expérience, QoE, configurée pour le terminal (210) et une session de trace relative à la mesure de QoE, la session de trace étant gérée dans le nœud de réseau source (200) par un nœud de lancement de mesure (200), le nœud de réseau source (200) comprenant :
un émetteur-récepteur (201) opérationnel pour échanger des messages sans fil avec le terminal (210) et d'autres nœuds de réseau (200) ; et
une circuiterie de traitement (202) connectée opérationnellement à l'émetteur-récepteur (201), la circuiterie de traitement (202) étant **caractérisée en ce qu'**elle est opérationnelle pour :
en réponse à un transfert imminent du service du terminal (210) depuis le nœud de réseau source (200) à un nœud de réseau cible (200), envoyer (12) des informations de session de trace relatives à la mesure de QoE au nœud de réseau cible (200) ;
recevoir (14), depuis le nœud de réseau cible (200), une rétroaction indiquant si la mesure de QoE est continuée ou terminée ;
notifier (16), au nœud de lancement de mesure (200), si la mesure de QoE est continuée par le terminal (210) ou terminée à la suite du transfert du service du terminal (210) depuis le nœud de réseau source au nœud de réseau cible (200) ; et
avant l'envoi (12) d'informations de session de trace relatives à la mesure de QoE au nœud de réseau cible (200), l'envoi d'un message au nœud de lancement de mesure (200) informant le nœud de lancement de mesure (200) du transfert du service.

18. Nœud de réseau source (200) selon la revendication 17, dans lequel la circuiterie de traitement (202) est en outre **caractérisée en ce qu'**elle est opérationnelle pour :
en réponse à l'information du nœud de lancement de mesure (200) du transfert du service du terminal (210), recevoir, depuis le nœud de lancement de mesure (200), les informations de session de trace modifiées relatives à la mesure de QoE ; et
dans lequel la circuiterie de traitement (202) est opérationnelle pour envoyer (12) des informations de session de trace relatives à la mesure de QoE au nœud de réseau cible (200) par l'envoi, au nœud de réseau cible (200), des informations de session de trace modifiées par le nœud de lancement de mesure (200).

19. Nœud de réseau cible (200) opérationnel dans un réseau de communication sans fil (220) et opérationnel pour fournir un service de communication sans fil à un terminal (210) à la suite d'un transfert du service du terminal (210) depuis un nœud de réseau source (200), dans lequel le nœud de réseau source (200) a une mesure de qualité d'expérience, QoE, configurée pour le terminal (210) et une session de trace relative à la mesure de QoE, la session de trace étant gérée dans le nœud de réseau source (200) par un nœud de lancement de mesure (200), le nœud de réseau cible (200) comprenant :
un émetteur-récepteur (201) opérationnel pour échanger des messages sans fil avec le terminal (210) et d'autres nœuds de réseau (200) ; et
une circuiterie de traitement (202) connectée opérationnellement à l'émetteur-récepteur (201), la circuiterie de traitement (202) étant **caractérisée en ce qu'**elle est opérationnelle pour :
recevoir (22) des informations de session de trace relatives à la mesure de QoE depuis le nœud de réseau source (200) ;
déterminer (24) s'il faut ou non continuer la mesure de QoE après le transfert ;
envoyer (26), au nœud de réseau source (200), une rétroaction indiquant si la mesure de QoE est continuée ou terminée ; et
si la mesure de QoE doit être continuée, recevoir (28), depuis le nœud de lancement de mesure (200), un ou plusieurs messages gérant la session de trace ; dans lequel les informations de session de trace relatives à la mesure de QoE reçues depuis le nœud de réseau source (200) ont été modifiées par le nœud de lancement de mesure (200) en réponse à la notification au nœud de lancement de mesure (200), par le nœud de réseau source (200), du transfert imminent du service du terminal (210) .

20. Nœud de réseau source (200) selon la revendication 19, dans lequel la circuiterie de traitement (202) est en outre **caractérisée en ce qu'**elle est opérationnelle pour, si la mesure de QoE doit être continuée, recevoir une désactivation de trace depuis le nœud de lancement de mesure (200) en utilisant la référence de session de trace ; ou dans lequel la circuiterie de traitement (202) est en outre **caractérisée en ce qu'**elle est opérationnelle pour, si la mesure de QoE doit être continuée, recevoir une désactivation de trace depuis le nœud de lancement de mesure (200) en utilisant l'identité de terminal (210).

21. Nœud de lancement de mesure (200) opérationnel dans un réseau de communication sans fil (220) comprenant au moins un nœud de réseau source (200) opérationnel pour fournir un service de communication sans fil à un terminal (210) avant un transfert du service du terminal (210), et un nœud de réseau cible (200) opérationnel pour fournir un service de communication sans fil au terminal (210) à la suite du transfert du service du terminal (210), dans lequel le nœud de réseau source (200) a une mesure de qualité d'expérience, QoE, configurée pour le terminal (210) et une session de trace relative à la mesure de QoE, la session de trace étant gérée dans le nœud de réseau source (200), le nœud de lancement de mesure (200) comprenant :
une circuiterie de communication (201) opérationnelle pour échanger des messages avec d'autres nœuds de réseau (200) ; et
une circuiterie de traitement (202) connectée opérationnellement à la circuiterie de communication (201), la circuiterie de traitement (202) étant **caractérisée en ce qu'**elle est opérationnelle pour :
recevoir (32), depuis le nœud de réseau source (200), une indication d'un transfert imminent du service du terminal (210) au nœud de réseau cible (200), et une indication indiquant si le nœud de réseau cible (200) peut continuer la mesure de QoE ;
si le nœud de réseau cible (200) peut continuer la mesure de QoE, envoyer (34), au nœud de réseau cible (200), un ou plusieurs messages gérant la session de trace ; et
avant la gestion de la session de trace au nœud de réseau cible (200), envoyer, au nœud de réseau source (200), des informations de session de trace modifiées pour que le nœud de réseau source (200) les envoie au nœud de réseau cible (200).

22. Nœud de lancement de mesure (200) selon la revendication 21, dans lequel le nœud de lancement de mesure (200) participe au transfert du service du terminal (210), et dans lequel les informations de session de trace modifiées sont envoyées au nœud de réseau source (200) dans un message de demande de relocalisation ; ou
dans lequel le nœud de lancement de mesure (200) ne participe pas au transfert du service du terminal (210), et dans lequel les informations de session de trace modifiées sont envoyées au nœud de réseau source (200) dans un message d'établissement de liaison.
